# EUROPEAN PATENT APPLICATION

(11) **EP 1 726 866 A2**
(43) Date of publication of application: **29.11.2006**
(21) Application number: 06010281.1
(22) Date of filing: 18.05.2006
(51) Int. Cl.: F16M 11/06, F16M 11/18

(54) **Support for film cameras**

(30) Priority: 24.05.2005 ES 200501253
(71) Applicant: Vallés Navarro, Alfredo, 08902 L'Hospitalet de Llobregat (ES); Vallés Navarro, Andrés, 08902 L'Hospitalet de Llobregat (ES)
(72) Inventor: Vallés Navarro, Alfredo, 08902 L'Hospitalet de Llobregat (ES); Vallés Navarro, Andrés, 08902 L'Hospitalet de Llobregat (ES)
(74) Representative: Canela Giménez, Teresa

(57) **Abstract**

Support for film camera, of the type intended to obtain the stabilization of the platform (7) of the head of said film camera relative to the horizontal plane, and comprising a modular body (1) containing an electric motor (2) that actuates a spindle (3), the end of said spindle (3) being connected by a point of attachment (5) to an end of said platform (7), which platform (7) swings on a point of rotation (6) associated with said body (1); the level of inclination of said platform (7) being received from a coder (9), said level of inclination being offset by the electronics of the device by actuating said electric motor (2) and rotating said platform (7) with the inclination of said modular body (1) relative to the horizon line in accordance with the readouts from a second coder (10).

## Description

### FIELD OF THE INVENTION

The object of the present invention is a support for film camera heads and other film-making devices, said support being modular and suitable for use both independently and attached to film camera cranes and, besides, performing the levelling of the horizon line of said cameras regardless of the position and movements of the support.

### PRIOR ART

Camera cranes have been extensively used in the film-making industry because of the need to displace film cameras to elevated positions above the ground and control them remotely, thereby avoiding displacement of the camera operator, who controls with the aid of different mechanisms from his/her position, for instance at the foot of the crane, the movements of the film camera.

The film-making industry faces the challenge of obtaining cranes that offer ease of use and filming stability, since it is to be noted that crane displacement causes undesired movements of the camera, which came is located at the extended tip of said crane, such movements resulting in deficient filming. Film cameras are attached to the end or tip of camera cranes by means of mechanisms intended to requlate film camera stability relative to the horizon line, which is parallel to the ground.

Patent US4943019 to Gyula Mester discloses a system for levelling camera cranes. A tachometer that measures the horizontal lack of level of the crane is located at the base of the crane and a servo moves a motor that displaces by means of a worm a toothed disk supporting the camera platform. Another tachometer provides information on the inclination of said platform and allows to synchronize the movement of the platform with the inclination of the crane.

The disadvantage of the above development is that the tip forms an assembly that is integral with the crane itself and only allows one single suspended position of the film camera support unless complementary connecting devices are utilized. Furthermore, the assembly is heavy and has an elevated inertia that hinders control of its movements.

One of the objects of the present invention is to provide a modular support for filming devices forming an independent assembly capable of being utilized in cranes or detached from them, said support further being capable of being used in different positions and orientations when utilized at the tip of a crane.

Another of the objects of the present invention is to provide a light-weight support for film cameras that results in a reduction of the inertia of the prior art devices and whose manufacture is simple and involves low maintenance costs.

### BRIEF DESCRIPTION OF THE INVENTION

The above objects and some more are achieved by the present invention that develops a support for film cameras comprising a modular body that contains an electric motor actuating a ball-spindle mechanism that displaces and axle which in turn pushes the camera platform.

Said platform swings along a middle axle and has a central orifice on its surface that permits to secure different types of film camera supports.

Data concerning platform inclination are retrieved from a coder located at the rotation axis of said platform, said data, after being compared with the data obtained by another coder that measures the inclination of the support base, determining the movement of the spindle and the inclination of the platform so as to keep said platform in a horizontal position at all times.

The modular body itself contains the control electronics required for levelling operation of the support, said support being, hence, a compact and autonomous device that can be secured through bolts at its base both to the tip of a camera crane at different heights and in different orientations and to any surface, such as for instance, those places where access of a camera crane is impossible or difficult (for example a ship).

In this manner it has been achieved a modular, low maintenance, economical and light-weight support for film cameras, whose reduced weight diminishes its inertia in respect of the prior art.

### BRIEF EXPLANATION OF THE DRAWINGS

For a better interpretation of the invention, it is accompanied by two merely illustrative and non-limiting sheets of drawings.

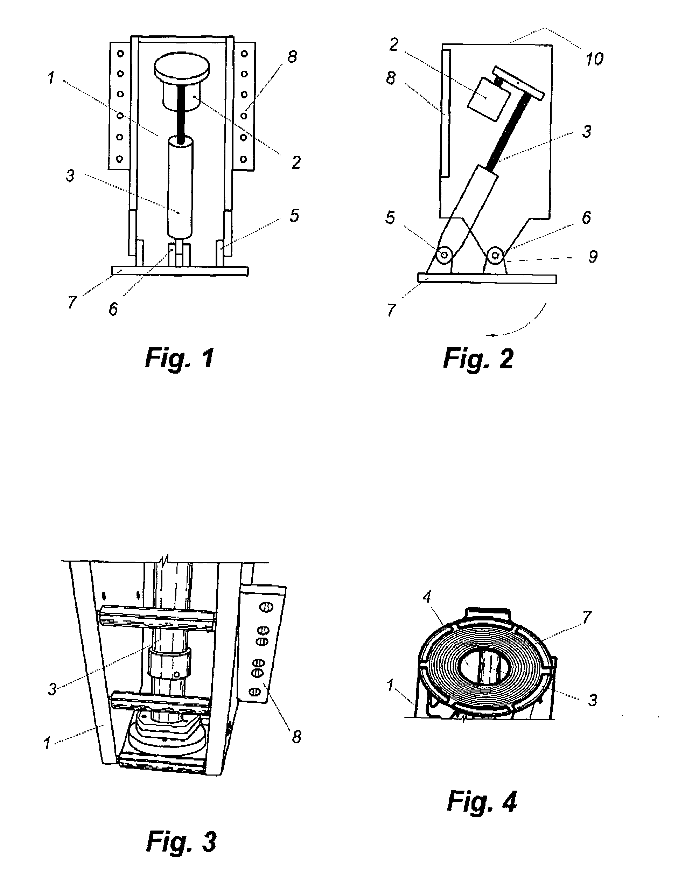

Figure 1 is an elevated view of a transverse section of the invention that allows to distinguish its constructional, parts.

Figure 2 is another representation of the embodiment shown in the previous figure, in an elevated and side view.

Figure 3 is a perspective representation of a partial view of an embodiment of the invention showing part of its interior.

Figure 4 is a perspective representation of an upper section of the support of the invention in a front view and with the support platform of the film camera inclined relative to the support.

Figures 5 and 6 are respective representations of the support for film cameras of the present invention, said support being located at the end of a camera crane for filming in different orientations, the support platform facing upwards or downwards.

Figures 7 and 8 other similar representations to figures 6 and 7 but showing the support of the invention in a displaced position with respect to the previous positions so as to be located closer to end of the camera crane tip.

### DETAILED EXPLANATION OF THE INVENTION

The invention consists of a support for film cameras comprising a body (1) housing an electric motor (2) that actuates a ball spindle (3) whose axel is attached by a point of articulation (5) to a movable platform (7) supporting the head of a film camera, said platform (7) being capable of rotating about an axle passing through the point of attachment (6) with said main body (1).

When the spindle (3) moves upwards, it moves outwardly thereby pushing the platform (7), which as a result is inclined in a direction, whereas when the spindle (3) moves downwards, it inclines the platform (7) in the opposite direction. In this way the movements of the spindle (3) result in movements of the support platform (7) of film camera heads.

It is important that supports and camera cranes can achieve a secure and reliable levelling of the camera horizon. In order to obtain that, it is necessary that the platform supporting the camera be parallel to the ground, which keeps the horizon line levelled.

Given the fact that the crane itself can be placed on an inclined surface, or the very elevation of the crane boom implies that its end keeps an angle relative to a horizontal plane, it becomes necessary to offset said inclination of the crane if the camera platform is meant to be levelled with the horizon. Furthermore, said need is on occasion dynamic since the crane is in movement and the offset of the horizon line is to be carried out gradually and constantly.

In the present invention the electronics of the device reads the inclination indications of the support platform (7) relative to its point of attachment (6) by means of a coder (9) of said point of attachment (6) and tries to offset it with the inclination obtained from the base of the body (1) through another coder (10) of said inclination relative to the skyline or horizon line.

The high weight of the tip of a film camera crane seriously hinders its efficiency, since it increases the weight and, as a result, the inertia of the filming device, this hindering all the movements pursued by the user. The higher the weight of the assembly the more difficult it is to correct said problem, that being the reason why it is so important to obtain a support and a tip of film camera crane that are light-weight.

In the present invention, the above result is optimally obtained by making a support with the minimum number of mechanisms that are formed by light-weight elements. Additionally, the present invention discloses a low-maintenance device resulting from its modularity and the nature of the mechanic elements comprising said device.

In the preferred embodiment of the invention, the platform is provided with a central orifice (4) having a diameter suitable for attaching different types of film camera heads. For instance, said size in one of the preferred embodiments is 70,5 mm.

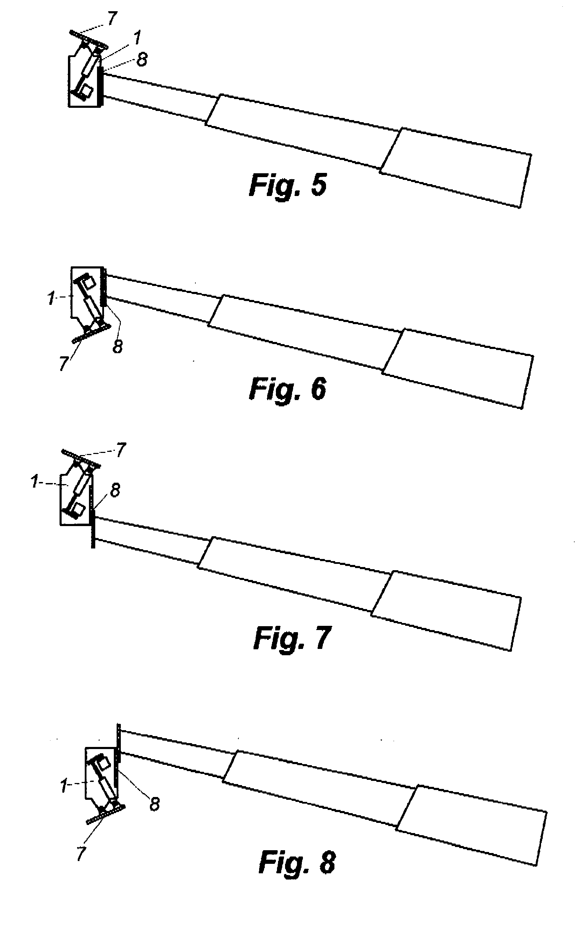

As can be seen in figures 5 to 8, the support of the invention can adopt with respect to the end of the camera crane different heights and orientations. The modular body (1) is attached to the crane by means of a plate (8) having orifices for passage of setscrews. Since said attachment plate (8) is provided with different orifices, it can be placed at a higher (figures 7 and 8) or less high (figures 5 and 6) position relative to the end of the crane. Said plate (8) can even be placed askew relative to the crane. As can be easily seen, since the device of the present invention does not depend neither upon gravity, nor any stationary devices integral with the crane itself, said device can be placed in more numerous positions than the tips of film camera cranes of the prior art.

In the prior art, the positions of the film cameras were limited, in certain inclinations of the tip of the crane, by the crane body, which could collide with the head of the film camera. In order to overcome this obstacle, it is necessary Lo use a separator of the camera support from the crane, usually a metal cylinder. That involves apart from an increase in the difficulties to prepare the filming device, a worsening of the problem arising from the weight of the assembly, not to mention the ensuing cost increase.

In said situation described in the prior art, besides, the gravity centre of the head lies with said extension further away from the point of rotation, this causing a pendulous movement that worsens the performance of the device.

In contrast, in the present invention it not necessary to utilize said kind of couplers because the support can be placed at different heights (figures 5 to 8) relative to the camera crane boom.

The electronics of the device is located within the body itself (1), so that the modular body (1) contains all the mechanics and means necessary for its functioning, this, therefore, being an autonomous module, that is capable of being used with different cranes or even independently, if need be.

For that reason the support of the present invention can be used in those places where it is not possible to place a big-sized crane. A ship, a vessel and a car are places where the support of the invention can be advantageously used.

It is understood that in the present case any changes regarding details of construction may be resorted to provided they do not alter or modify the qist of the invention.

## Claims

1. Support for film camera, of the type intended to obtain the stabilization of the platform (7) of the head of said film camera relative to the horizontal plane, **characterized in that** it comprises a modular body (1) containing an electric motor (2) that actuates a spindle (3), the end of said spindle (3) being connected by a point of attachment (5) to an end of said platform (7), which platform (7) swings on a point of rotation (6) associated with said body (1); the level of inclination of said platform (7) being received from a coder (9), said level of inclination being offset by the electronics of the device by actuating said electric motor (2) and rotating said platform (7) with the inclination of said modular body (1) relative to the horizon line in accordance with the readouts from a second coder (10).

2. **Support for film camera,** according to claim 1, **characterized in that** said modular body (1) is provided with an attachment plate (8) having a plurality a orifices set at different heights for passage of the corresponding setscrews that enable fixing to any surface, preferably to the surface of the crane.

3. **Support for film camera,** according to the previous claims, **characterized in that** said platform (7) is provided with a central orifice (4) having a diameter suitable for the attachment of different film camera heads.

4. **Support for film camera,** according to the previous claims, **characterized in that** said central orifice (4) is approximately 70,5 mm, in diameter.
